# EUROPÄISCHE PATENTSCHRIFT

(11) **EP 4 436 766 B1**
(45) Veröffentlichungstag und Bekanntmachung des Hinweises auf die Patenterteilung: **10.06.2026**
(21) Anmeldenummer: 22773425.8
(22) Anmeldetag: 02.09.2022
(51) Int. Cl.: B29C 53/02, B29C 67/00, B29L 31/56, B65D 41/34

(54) **VERFAHREN UND VORRICHTUNG ZUM FALTEN**
METHOD AND DEVICE FOR FOLDING
PROCÉDÉ ET DISPOSITIF DE PLIAGE

(30) Priorität: 25.11.2021 DE 102021130889
(43) Veröffentlichungstag der Anmeldung: 02.10.2024
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: FUHRMANN, Gerd, 52066 Aachen (DE); WULF, Viktor, 52078 Aachen (DE); COX, Pascal, 52525 Heinsberg (DE)
(74) Vertreter: Kohlmann, Kai
(86) Internationale Anmeldenummer: PCT/EP2022/074438
(87) Internationale Veröffentlichungsnummer: WO 2023/094043

(56) Entgegenhaltungen:
- EP-A1- 1 243 520
- WO-A2-2010/046858

## Beschreibung

Die Erfindung betrifft ein Verfahren zum kontinuierlichen Falten von an einer Oberkante eines Garantiebandes angebundenen Sperrelementen übereinstimmender Kunststoffverschlüsse, wobei das Garantieband an der zylindrischen Verschlusskappe jedes Kunststoffverschlusses angeordnet ist. Die Anbindung erfolgt im Wege des Spritzgießens über Stege unter Ausbildung von Gelenkverbindungen. Außerdem betrifft die Erfindung eine Faltvorrichtung zum kontinuierlichen Falten derartiger Kunststoffverschlüsse. Das Falten erfolgt im Wege eines Einwärts-Schwenkens der Sperrelemente.

Die Begriffe "Oberkante " bzw. "oberer Rand" werden in dieser Patentanmeldung in Bezug auf einen Kappenboden einer Verschlusskappe des Kunststoffverschlusses als tiefsten Bezugspunkt verstanden.

Kunststoffverschlüsse mit Garantieband werden auch als Garantieverschlüsse bezeichnet. Die Garantiefunktion derartiger Verschlüsse besteht darin, dass beim erstmaligen Entfernen der Verschlusskappe ein Garantieband wenigstens teilweise abgerissen wird. Das Garantieband ist meist durch dünne Stege mit dem oberen Rand der zylindrischen Verschlusskappe jedes Kunststoffverschlusses verbunden. An eine Oberkante des Garantiebandes angebundene Sperrelemente stehen mit einem Wulst an einem Behälter, beispielsweise an einem Flaschenhals, in Eingriff. Das Garantieband ist auf diese Weise an dem Flaschenhals fixiert und reißt beim ersten Öffnen des Kunststoffverschlusses zumindest teilweise ab. Die Gestaltung der Sperrelemente des Garantiebandes hat einen wesentlichen Einfluss auf die Güte der Garantiefunktion.

Die Rückhaltefunktion des Garantiebandes wird durch die Sperrelemente erfüllt, die nach innen in die Verschlusskappe hinein gerichtet sind. Ein Kunststoffverschluss mit einem derartigen Garantieband lässt sich jedoch nur in der Form spritzgießen, dass die Sperrelemente noch nicht in die Verschlusskappe hinein gerichtet sind, sondern in Verlängerung des Garantiebandes nach oben weisen.

Nach dem Spritzgießen müssen die Sperrelemente deshalb in einem weiteren Arbeitsgang schräg nach innen, zum Kappenboden der Verschlusskappe gefaltet werden.

Zum Falten kommen sogenannte Faltmaschinen zum Einsatz, die im Wesentlichen aus einem die Kunststoffverschlüsse aufnehmenden Kreisförderer sowie einem oberhalb jedes Kunststoffverschlusses angeordneten Pressstempel bestehen, der durch eine Hubbewegung die Sperrelemente erfasst und einwärts faltet. Dabei taucht der Pressstempel in die Verschlusskappe des Kunststoffverschlusses ein. Diese Faltmaschinen erfordern eine exakte Zentrierung jedes Kunststoffverschlusses zu dem in vertikaler Richtung darüber angeordneten, mit dem Hohlraum der Verschlusskappe fluchtenden Presszylinder. Derartige Faltmaschinen sind beispielsweise in der EP 1 243 520 A1 und der WO 2010/046858 A2 beschrieben.

Die US 4,613,052 A offenbart einen Kunststoffverschluss mit einem umlaufenden, an der Oberkante des Garantiebandes angebundenen Innenband, welches nach dem Spritzgießen in einem zweiten Arbeitsgang nach innen gefaltet werden muss. Zu diesem Zweck wird ein Faltrad gegen das Innenband gedrückt. Durch kontrolliertes Drehen des Kunststoffverschlusses um seine Hochachse wird das Innenband an dem Faltrad vorbeigeführt und nach einer Umdrehung vollständig nach innen gefaltet.

Die Durchsatzgeschwindigkeit der bekannten Faltvorrichtungen ist beschränkt, da das Faltwerkzeug, sei es nun ein Pressstempel oder ein Faltrad, auf jede einzelne Verschlusskappe bzw. jeden Kunststoffverschluss genau ausgerichtet werden muss. Wird zugunsten höherer Durchsatzgeschwindigkeiten auf eine genaue Ausrichtung verzichtet, beeinträchtigt dies die Genauigkeit des Faltvorgangs, was zu Problemen bei der Qualität der Kunststoffverschlüsse führen kann. Des Weiteren verursachen die bekannten Faltvorrichtungen aufgrund der hohen Werkzeugkosten und des geringen Arbeitstempos hohe Kosten.

Aus der DE 93 09 067 U1 ist eine Vorrichtung zum Zurückfalten der Rückhalteelemente eines Verschlusskappen-Garantiebands bekannt. Die Vorrichtung weist ein Faltwerkzeug, z.B. eine Faltwalze mit einer Biegeschicht aus elastischem Werkstoff auf. Etwa parallel zu der Faltwalzenachse ist ein Anpresselement angeordnet, dessen Abstand zu der Faltwalze kleiner als die Höhe der Verschlusskappe ist. Die Biegeschicht des Faltwerkzeugs hat eine Arbeitsfläche, welche an ihrer schmalsten Stelle wenigstens gleich breit wie der Durchmesser des zu bearbeitenden Garantiebandes ist. Diese Arbeitsfläche wird zum Zurückfalten der Rückhalteelemente gegen die Stirnseite des Garantiebands gepresst. Da die Biegeschicht aus elastischem Werkstoff besteht, wird die Arbeitsfläche durch die Anpresskraft elastisch verformt. Sie wird teilweise in die Verschlusskappe hineingedrückt und biegt dabei gleichzeitig die Rückhalteelemente über die horizontale Position hinaus nach innen. Die optimale Härte der Biegeschicht ist von den Falteigenschaften der Rückhalteelemente abhängig. Damit die Arbeitsfläche der Biegeschicht nach dem Faltvorgang wieder ihre ursprüngliche Form einnimmt, muss die Biegeschicht aus elastischem Material bestehen.

Ausgehend von diesem Stand der Technik liegt der Erfindung die Aufgabe zugrunde, ein Verfahren und eine Faltvorrichtung zu schaffen, die mit hoher Geschwindigkeit ein zuverlässiges Falten der Sperrelemente eines Kunststoffverschlusses der eingangs erwähnten Art erlaubt, die insbesondere keine genaue Ausrichtung jedes einzelnen Kunststoffverschlusses auf das Faltwerkzeug erfordert.

Diese Aufgabe wird durch ein Verfahren mit den Merkmalen des Anspruchs 1 und eine Faltvorrichtung mit den Merkmalen des Anspruchs 7 gelöst.

Überraschend hat sich gezeigt, dass bei den eingangs beschriebenen Kunststoffverschlüssen die Sperrelemente durch einen flächigen Druck auf die nach oben weisenden oberen Ränder der Sperrelemente des ungefalteten Kunststoffverschlusses schnell und zuverlässig gefaltet werden können. Der Faltvorgang wird unterstützt, wenn die nach oben weisenden Sperrelemente vor dem Falten durch den Spritzgießprozess bereits leicht nach innen in Richtung der Hochachse des Kunststoffverschlusses geneigt sind.

Jeder Kunststoffverschluss wird kontinuierlich zwischen eine mit dem oberen Rand der Sperrelemente interagierende Druckfläche und eine Führungsfläche in einem Faltbereich gebracht. Das Einbringen in den Faltbereich erfolgt vorzugsweise mittels eines Stetigförderers.

Die Druckfläche und die Führungsfläche sind in dem Faltbereich derart zueinander angeordnet, dass die Oberkante des Garantiebandes jedes Kunststoffverschlusses nach dem Faltvorgang zeitweilig, insbesondere ringförmig an der Druckfläche anliegt.

Um beim Durchlauf der Kunststoffverschlüsse durch den Faltbereich eine Verzahnung der Sperrelemente mit der Druckfläche auszuschließen, ist die Druckfläche starr, d.h. nicht elastisch ausgebildet. Die Druckfläche verhält sich im technischen Sinne annähernd wie ein starrer Körper mit einer nicht nachgiebigen Oberfläche, die sich unter den zu erwartenden Belastungen nicht verformt.

Die Druckfläche ist vorzugsweise integraler Bestandteil eines Bauteils. Für eine bevorzugte Faltvorrichtung zur Durchführung des Verfahrens ist das Bauteil eine kreisförmige Platte.

Die Druckfläche besteht vorzugsweise aus einem harten, insbesondere metallischen Werkstoff. Die metallischen Werkstoffe können Eisenwerkstoffe, Nichteisenmetalle (NE-Metalle), wie z.B. Legierungen auf Basis von Kupfer und Aluminium oder Hartmetalle sein.

Die Härte der Druckfläche ist größer als die Härte der Kunststoffverschlüsse und weist eine Rockwell-Härte mit einem Härtewert ≥ 50 HRC auf. Die größere Härte wirkt sich vorteilhaft auf das Verschleißverhalten der Druckfläche aus, die mit den Sperrelementen der Kunststoffverschlüsse interagiert. Darüber hinaus trägt die Härte dazu bei, dass sich die Sperrelemente nicht mit der Druckfläche verzahnen, sondern während des Faltvorgangs auf der Druckfläche gleiten können. Der Gleitreibungskoeffizient (µ_{GR}) zwischen dem Material der Druckfläche und dem Kunststoffmaterial des Kunststoffverschlusses ist µ_{GR} ≤ 0,50, vorzugsweise µ_{GR} ≤ 0,35.

Beim Rockwell Härteprüfverfahren wird der Härtewert (HRC) des Werkstoffes ermittelt, indem ein Eindringkörper mit einer vordefinierten Kraft in das zu prüfende Material hineingepresst wird. Die Härteprüfung nach Rockwell erfolgt für metallische Werkstoffe nach der EN ISO 6508-1:2016.

Die Bestimmung des Reibungskoeffizienten erfolgt nach der DIN EN ISO 8295:2004. Bei tribologischen Standardprüfungen von Kunststoffreibpaarungen wird eine klötzchenförmige Probe A (Oberprobe) mit definierter Normalkraft auf die plattenförmige Probe B (Unterprobe) gedrückt und auf dieser geradlinig oszillierend hin- und her bewegt. Dabei wird der Gleitreibungswert über die Versuchsdauer aufgezeichnet.

Der Abstand (H), d.h. die geringste Entfernung zwischen der Druckfläche und der Führungsfläche in dem Faltbereich ist gleich oder geringfügig kleiner als die Höhe (h) der Verschlusskappe des Kunststoffverschlusses und des Garantiebandes. Geringfügig bedeutet, dass der Abstand maximal 3% kleiner als die Höhe (h) ist. Der Abstand (H) bewirkt, dass die Oberkante des Garantiebandes jedes Kunststoffverschlusses nach dem Falten der Sperrelemente zeitweilig, zumindest teilweise an der Druckfläche anliegt.

Die Faltvorrichtung zur Durchführung des erfindungsgemäßen Verfahrens benötigt lediglich einen Antrieb mit einer um eine Drehachse drehbaren Antriebswelle, eingerichtet um das Taschenrad, die Führungsplatte und die Druckplatte gleichsinnig mit übereinstimmender Winkelgeschwindigkeit zu drehen. Mittels des Taschenrades wird jeder Kunststoffverschluss von dem Einlaufbereich kontinuierlich in den Faltbereich gebracht.

Der Antrieb dient zugleich der Betätigung des Faltwerkzeuges, das bei der Faltvorrichtung durch die Führungsplatte und die Druckplatte gebildet wird. Die Führungsplatte weist eine in der Plattenebene liegende ringförmige Führungsfläche und die Druckplatte eine gegenüber der Plattenebene abgeschrägte, ringförmige Druckfläche auf, die der Führungsfläche gegenüberliegt. Die abgeschrägte, ringförmige Druckfläche kann durch Abkantung oder Anfasung im Randbereich der Druckplatte erzeugt werden. Die Führungsfläche interagiert in dem Faltbereich mit dem oberen Rand des Sperrelementes jedes zu faltenden Kunststoffverschlusses, der sich mit seinem Kappenboden auf der ringförmigen Führungsfläche als Widerlager abstützt.

Eine Ausgleichskupplung, z.B. eine Federscheibenkupplung oder ein Kardangelenk, zwischen der Antriebswelle des gemeinsamen Antriebs und der Druckplatte gleicht einen angularen Versatz (α) zwischen der Drehachse der Antriebswelle und der Drehachse der Druckplatte aus.

Das Kardangelenk gleicht den angularen Versatz (α) zwischen der Drehachse der Antriebswelle und der Drehachse der Welle, die mit der Druckplatte verbunden ist, aus. Die beiden Wellen bilden zusammen eine Kardanwelle, die die Drehmomentübertragung in einem um den Winkel (α) geknickten Wellenstrang auf die Druckplatte ermöglicht. Die Drehmomentübertragung von der Welle auf die Druckplatte erfolgt vorzugsweise mittels einer formschlüssigen Welle-Nabeverbindung, insbesondere einer Keilwelle. Alternativ kommt eine Übertragung mittels einer Zahnwelle oder Passfeder in Betracht. Diese bevorzugte Welle-Nabeverbindung erlaubt eine axiale Bewegung der Druckplatte entlang von deren Drehachse und vermeidet dadurch eine Überbestimmung durch die Führungsmittel der Druckplatte.

Die beiden Drehachsen mit angularem Versatz (α) liegen in einer Ebene, die die Führungsfläche und die Druckfläche in dem Faltbereich schneidet. Die Schnittlinie zwischen der Ebene und der Führungsfläche und die Schnittlinie zwischen der Ebene und der Druckfläche verlaufen parallel zueinander, wenn der angulare Versatz (α) zwischen der Drehachse der Antriebswelle und der Drehachse der Druckplatte dem Winkel (α) der abgeschrägten, ringförmigen Druckfläche gegenüber der Plattenebene entspricht.

Führungsmittel bewirken eine Drehung der Druckplatte um deren Drehachse mit konstantem angularem Versatz (α) zu der Drehachse der Antriebswelle, wobei die Drehachse raumfest ist.

Im Falle einer Kardanwelle als Ausgleichskupplung können die Welle, die mit der Druckplatte verbunden ist, und die Antriebswelle gestellfest gelagert werden, um den angularen Versatz (α) (Knickwinkel) der Kardanwelle raumfest festzulegen.

In einer bevorzugten Ausführungsform der Erfindung umfassen die Führungsmittel mindestens drei auf der Oberseite der Druckplatte aufliegende, an einem Gestell drehbar gelagerte Führungsrollen. Die Führungsrollen sind unabhängig voneinander höhenjustierbar, um eine Drehung der Druckplatte um deren ortsfeste Drehachse mit angularem Versatz zu der ortsfesten Drehachse der Antriebswelle zu bewirken. Die Höhenlage der Führungsrollen wird derart eingestellt, dass in einem Einlaufbereich für die ungefalteten Kunststoffverschlüsse in das Taschenrad der Abstand, d.h. die geringste Entfernung zwischen der ringförmigen Druckfläche und der ringförmigen Führungsfläche größer als die Höhe des ungefalteten Kunststoffverschlusses ist. Hierdurch wird sichergestellt, dass die ungefalteten Kunststoffverschlüsse dem Taschenrad problemlos zugeführt werden können.

Im Falle einer Kardanwelle als Ausgleichskupplung, einer Drehmomentübertragung von der Welle auf die Druckplatte mittels einer formschlüssigen Welle-Nabeverbindung und Ausgestaltung der Führungsmittel als drei auf der Oberseite der Druckplatte aufliegende Rollen muss der Abstand zwischen der Führungsplatte und der Druckplatte durch mindestens eine zwischen den Platten wirksame Druckfeder aufrechterhalten werden.

Aufgrund des angularen Versatzes der Drehachse der Druckplatte gelangt zunächst der obere Rand jedes Sperrelementes beim Einlauf in den Faltbereich mit der ringförmigen Druckfläche in Kontakt. Durch weitere Drehung des Taschenrades gelangt nach Abschluss des Faltvorgangs die Oberkante des Garantiebandes des Kunststoffverschlusses an der Druckfläche zur Anlage.

Um in dem Faltbereich eine möglichst gleichmäßige Krafteinleitung in den zu faltenden oberen Rand des Sperrelementes jedes Kunststoffverschlusses zu gewährleisten, entspricht der angulare Versatz zwischen der Drehachse der Antriebswelle und der Drehachse der Druckplatte dem Winkel der abgeschrägten ringförmigen Druckfläche gegenüber der Plattenebene.

Der Abstand (H), d.h. die geringste Entfernung zwischen der ringförmigen Druckfläche und der ringförmigen Führungsfläche in dem Faltbereich ist gleich oder geringfügig kleiner als die Höhe der Verschlusskappe des Kunststoffverschlusses und des Garantiebandes.

Zur Vermeidung von Unwuchten beim Betrieb der Faltvorrichtung sind die Führungsplatte und die Druckplatte vorzugsweise kreisförmig. Die kreisförmigen Platten müssen nicht zwingend nach Art eines Scheibenrades ausgebildet sein, sondern können zur Reduktion der bewegten Massen Ausnehmungen zwischen der ringförmigen Druck- bzw. Führungsfläche und der jeweiligen Drehachse aufweisen, sodass beispielsweise eine speichenförmige Struktur gebildet wird.

Nachfolgend wird anhand der Figuren eine bevorzugte Faltvorrichtung zur Durchführung des Verfahrens näher erläutert. Es zeigen
- **Figur 1a**: eine perspektivische Ansicht eines ungefalteten Kunststoffverschlusses,
- **Figur 1b**: eine Seitenansicht eines ungefalteten Kunststoffverschlusses,
- **Figur 1c**: eine Schnittdarstellung eines gefalteten Kunststoffverschlusses,
- **Figur 2a**: eine perspektivische Gesamtansicht einer erfindungsgemäßen Faltvorrichtung zur Durchführung des Verfahrens,
- **Figur 2b**: eine Darstellung der Faltvorrichtung nach Figur 2a mit entfernter Druckplatte,
- **Figur 3**: eine Aufsicht auf die Faltvorrichtung nach Figur 2b sowie
- **Figur 4**: eine geschnittene Seitenansicht der Faltvorrichtung mit vergrößerter Darstellung des Faltbereichs.

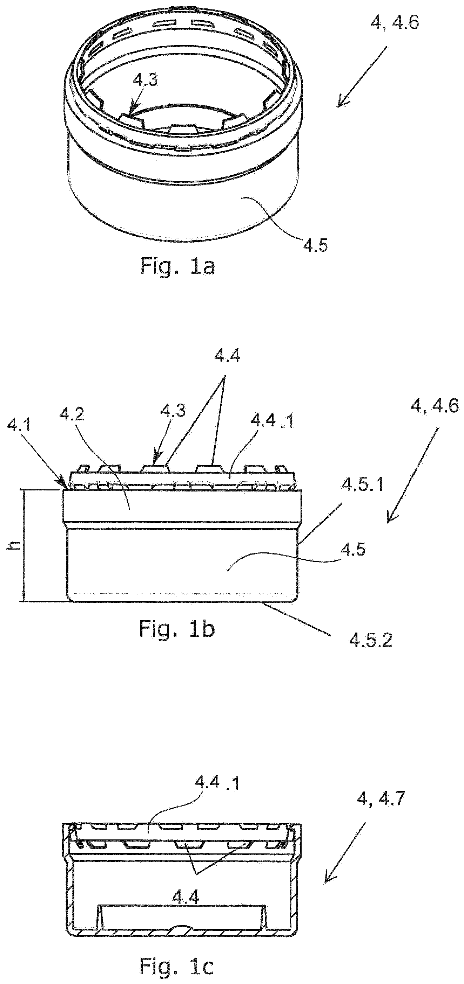

Figuren 1 a-c zeigen einen mit dem erfindungsgemäßen Verfahren und der Faltvorrichtung zu faltenden Kunststoffverschluss 4. Figuren 1a, 1b zeigen einen ungefalteten Kunststoffverschluss 4, 4.6 und Figur 1c einen gefalteten Kunststoffverschluss 4, 4.7.

Der Kunststoffverschluss 4 weist eine Verschlusskappe 4.5, die von einem zylindrischen Mantel 4.5.1 und einem Boden 4.5.2 begrenzt wird, auf. Mit dem oberen Rand der Verschlusskappe 4.5 ist ein Garantieband 4.2 durch nicht näher dargestellte dünne Stege verbunden.

An eine Oberkante 4.1 des Garantiebandes 4.2 sind mehrere Sperrelemente 4.4 angebunden, die untereinander über einen Ring 4.4.1 verbunden sind. Wie insbesondere aus Figur 1b ersichtlich, sind die Sperrelemente 4.4 leicht nach innen in Richtung der Rotationsachse des ungefalteten Kunststoffverschlusses 4, 4.6 geneigt. Die Sperrelemente 4.4 müssen durch den Faltvorgang einwärts in Richtung des Kunststoffverschlusses gefaltet werden, wie dies in der Schnittdarstellung nach Figur 1c dargestellt ist.

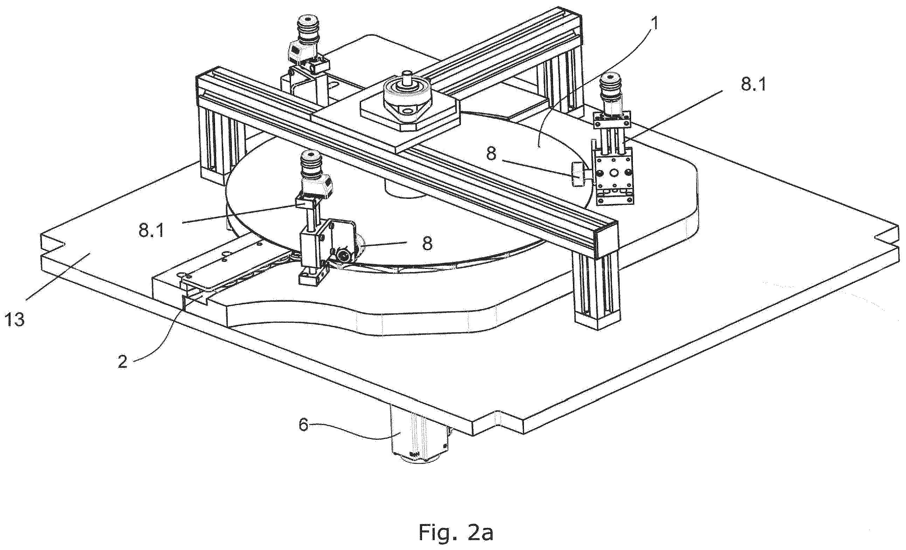

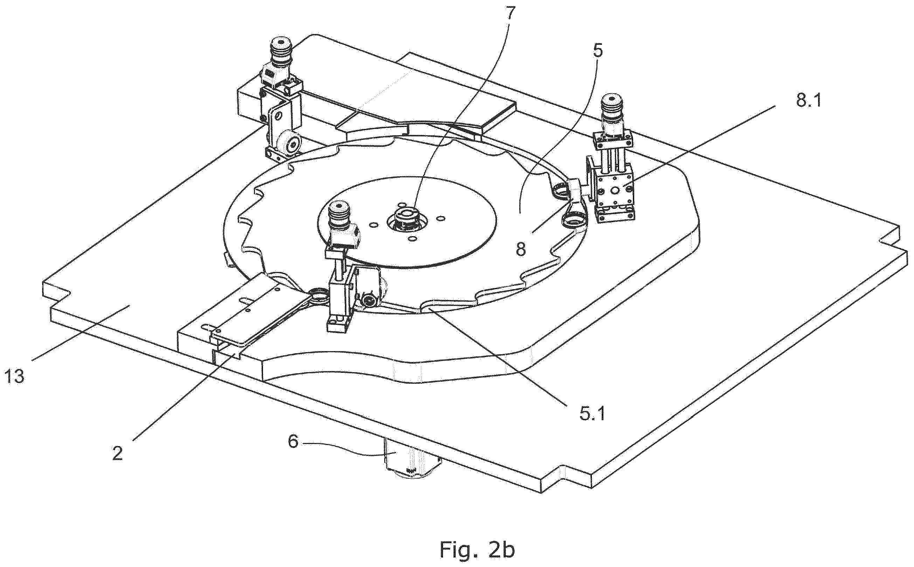

Aus der Zusammenschau der Figuren 2 a, b und 3 ist der grundsätzliche Aufbau der Faltvorrichtung zum kontinuierlichen Falten der Sperrelemente 4.4 von übereinstimmenden Kunststoffverschlüssen 4 erkennbar. Die Vorrichtung umfasst ein drehbares Taschenrad 5, eine an der Unterseite des Taschenrades 5 angeordnete kreisförmige Führungsplatte 9 und eine an der Oberseite des Taschenrades 5 angeordnete kreisförmige Druckplatte 1.

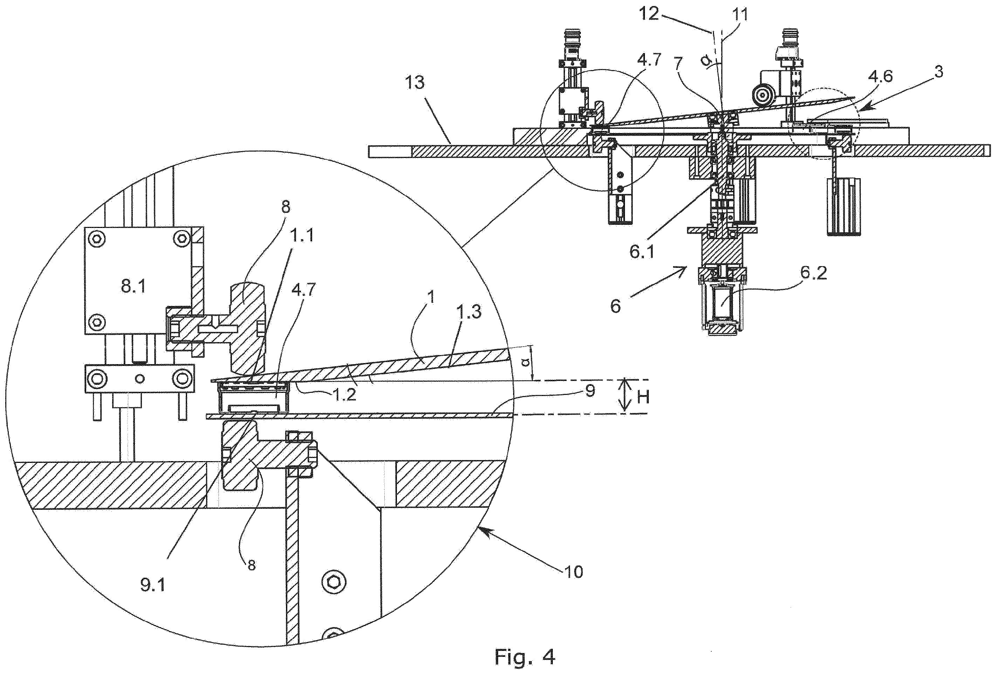

An einer Unterseite eines Gestells 13 der Faltvorrichtung ist ein Antrieb 6 befestigt, der einen Motor 6.2 mit einer um eine Drehachse 11 drehbaren Antriebswelle 6.1 aufweist, die eingerichtet ist um das Taschenrad 5, die Führungsplatte 9 und die Druckplatte 1 gleichsinnig und mit übereinstimmender Winkelgeschwindigkeit zu drehen (vgl. Figur 4).

Die Druckplatte 1 ist mit der Antriebswelle 6.1 mittels einer Ausgleichskupplung 7, beispielsweise einer Federscheibenkupplung oder eines Kardangelenks, verbunden, um einen angularen Versatz (α) zwischen der Drehachse 11 der Antriebswelle 6.1 und der Drehachse 12 der Druckplatte 1 auszugleichen. Die Drehachsen 11, 12 sind raumfest, sodass die Druckplatte 1 zu der Führungsplatte 9 stets die in Figur 4 dargestellte, geneigte Position beibehält. Zur Einstellung des angularen Versatzes (α) der Drehachsen 11, 12 sind drei auf der Oberseite der Druckplatte 1 abrollende Führungsrollen 8 höhenverstellbar an gestellfesten Lagerböcken 8.1 angeordnet (vgl. Fig. 2a).

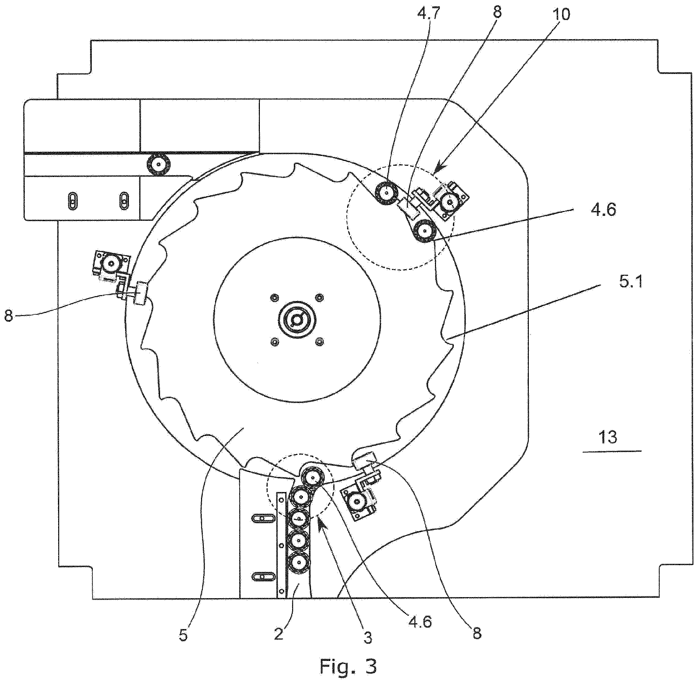

Über eine am besten aus Figur 3 erkennbare Zuführung 2 gelangen die ungefalteten Kunststoffverchlüsse 4, 4.6 in einem Einlaufbereich 3 vereinzelt in die Taschen 5.1 des gegen den Uhrzeigersinn umlaufenden Taschenrades 5. Die Zufuhr erfolgt beispielsweise durch einen Stauförderer und/oder einen Druckluftförderer oder mittels Schwerkraft.

Von dem Einlaufbereich 3 transportiert das Taschenrad 5 die ungefalteten Kunststoffverschlüsse 4.6 auf einer kreisförmigen Bahn in Richtung des Faltbereichs 10. Dabei liegen die Kunststoffverschlüsse 4 mit dem Kappenboden 4.5.2 auf einer ringförmigen Führungsfläche 9.1 der Führungsplatte 9 auf (vgl. Figur 4). Während des Transports findet keine Relativbewegung zwischen den Kunststoffverschlüssen 4 und der Führungsplatte 9 statt, weil sich die Führungsplatte 9 gleichsinnig und mit übereinstimmender Winkelgeschwindigkeit wie das Taschenrad 5 dreht. Schleifspuren am Kappenboden 4.5.2 werden daher wirksam vermieden.

Durch den angularen Versatz (α) zwischen der Drehachse 11 der Antriebswelle und der Drehachse 12 der Druckplatte 1 ist der Abstand der Druckplatte 1 zu der Führungsplatte 9 im Einlaufbereich 3 deutlich größer als in dem Faltbereich 10 (vgl. Figur 4). Insbesondere ist der Abstand zwischen der Druckplatte 1 und der Führungsplatte 9 im Einlaufbereich 3 größer als die Höhe der ungefalteten Kunststoffverschlüsse 4, 4.6, sodass diese dem Taschenrad 5 in dem Einlaufbereich 3 problemlos zugeführt werden können.

Entlang des kreisförmigen Förderwegs in Richtung des Faltbereichs 10 nimmt der Abstand zwischen der Führungsplatte 9 und der Druckplatte 1 allmählich ab. Die Druckplatte 1 weist eine Abschrägung 1.2 um einen Winkel (α) gegenüber der Plattenebene 1.3 der Druckplatte 1 auf, der dem angularen Versatz (α) zwischen den Drehachsen 11, 12 entspricht. Der Abstand (H), d.h. die geringste Entfernung zwischen der ringförmigen Druckfläche 1.1 und der ringförmigen Führungsfläche 9.1 in dem Faltbereich 10 entspricht der Höhe (h) der Verschlusskappe 4.5 des Kunststoffverschlusses 4 und des Garantiebandes 4.2.

Durch diesen Abstand (H) in Verbindung mit dem angularen Versatz (α) wird bewirkt, dass die Oberkante 4.1 des Garantiebandes 4.2 jedes Kunststoffverschlusses 4 nach Beendigung der Faltung in dem Faltbereich 10 zeitweilig an der Druckfläche 1.1 der Druckplatte 1 anliegt. Dieser Zeitpunkt ist in der vergrößerten Darstellung in Figur 4 veranschaulicht. Es ist erkennbar, dass die Sperrelemente 4.4 die in Figur 1c dargestellte Position eingenommen haben und dadurch die Oberkante 4.1 des Garantiebandes 4.2 an der Druckfläche 1.1 anliegt.

Des Weiteren ist aus der vergrößerten Darstellung in Figur 4 erkennbar, dass eine der Führungsrollen 8 oberhalb des Faltbereichs 10 auf der Druckplatte 1 und eine weitere, nicht höhenverstellbare Führungsrolle 8 unterhalb des Faltbereichs 10 auf der Unterseite der Führungsplatte 9 abrollt und dort eine Stützfunktion hat.

Die Druckplatte 1 und die Druckfläche 1.1 bestehen aus einem Werkstoff mit großer Härte, die deutlich über der Härte der Kunststoffverschlüsse 4 liegt. Die große Härte wirkt sich vorteilhaft auf das Verschleißverhalten der Druckfläche 1.1 aus, die mit den Sperrelementen 4.4 der Kunststoffverschlüsse 4 während des Faltens interagiert. Der Gleitreibungskoeffizient zwischen dem Material der Druckplatte 1 und der Kunststoffverschlüsse 4 ist vorzugsweise kleiner 0,35. Durch die Härte der Druckplatte 1 und den Gleitreibungskoeffizienten wird sichergestellt, dass sich die Sperrelemente 4.4 der Kunststoffverschlüsse 4 nicht mit der Druckfläche 1.1 der Druckplatte 1 verzahnen oder verhaken, sondern einwandfrei auf dieser gleiten können. Hierdurch wird bei dem raschen Durchlauf der Kunststoffverschlüsse 4 durch den Faltbereich 10 ein prozesssicherer Faltvorgang gewährleistet.

### Bezugszeichenliste

| | |
|---|---|
| 1 | Druckplatte |
| 1.1 | Druckfläche |
| 1.2 | Abschrägung |
| 1.3 | Plattenebene |
| 2 | Zuführung |
| 3 | Einlaufbereich |
| 4 | Kunststoffverschluss |
| 4.1 | Oberkante des Garantiebands |
| 4.2 | Garantieband |
| 4.3 | Oberer Rand des Sperrelements |
| 4.4 | Sperrelement |
| 4.4.1 | Ring Sperrelement |
| 4.5 | Verschlusskappe |
| 4.5.1 | Mantel |
| 4.5.2 | Kappenboden |
| 4.6 | Kunststoffverschluss ungefaltet |
| 4.7 | Kunststoffverschluss gefaltet |
| 5 | Taschenrad |
| 5.1 | Taschen |
| 6 | Antrieb |
| 6.1 | Antriebswelle |
| 6.2 | Motor |
| 7 | Ausgleichskupplung |
| 8 | Führungsrolle |
| 8.1 | Lagerbock |
| 9 | Führungsplatte |
| 9.1 | Führungsfläche |
| 10 | Faltbereich |
| 11 | Drehachse Antriebswelle |
| 12 | Drehachse Druckplatte |
| 13 | Gestell |
| H | Abstand der Druckfläche zur Führungsfläche im Faltbereich |
| h | Höhe der Verschlusskappe und des Garantiebandes |
| α | Angularer Versatz zwischen Drehachse der Druckplatte und Drehachse der Führungsplatte |

## Patentansprüche

1. Verfahren zum kontinuierlichen Falten von an einer Oberkante (4.1) eines Garantiebandes (4.2) angebundenen Sperrelementen (4.4) übereinstimmender Kunststoffverschlüsse (4), wobei das Garantieband (4.2) an einer zylindrischen Verschlusskappe (4.5) jedes Kunststoffverschlusses (4) angeordnet ist,
- jeder Kunststoffverschluss (4) kontinuierlich zwischen eine mit einem oberen Rand (4.3) der Sperrelemente (4.4) interagierende Druckfläche (1.1) und eine Führungsfläche (9.1) in einem Faltbereich (10) entlang eines Förderwegs gebracht wird, wobei
- die Kunststoffverschlüsse (4) durch den Faltbereich (10) durchlaufen,
- die Druckfläche (1.1) und die Führungsfläche (9.1) in dem Faltbereich (10) derart zueinander angeordnet sind, dass die Oberkante (4.1) des Garantiebandes (4.2) jedes Kunststoffverschlusses (4) nach Beendigung des Faltvorgangs zeitweilig zumindest teilweise an der Druckfläche (1.1) anliegt,
- der Abstand (H), d.h. die geringste Entfernung zwischen der Druckfläche (1.1) und der Führungsfläche (9.1) in dem Faltbereich (10) gleich oder geringfügig kleiner als die Höhe (h) der Verschlusskappe (4.5) des Kunststoffverschlusses (4) und des Garantiebandes (4.2) ist und
- die Druckfläche (1.1) starr ist

2. Verfahren nach Anspruch 1, **dadurch gekennzeichnet, dass** jeder Kunststoffverschluss (4) kontinuierlich mittels eines Stetigförderers in den Faltbereich (10) gebracht wird, der entlang des Förderwegs des Stetigförderers angeordnet ist.

3. Verfahren nach Anspruch 1 oder 2, **dadurch gekennzeichnet,** das die Druckfläche (1.1) aus einem metallischen Werkstoff besteht.

4. Verfahren nach einem der Ansprüche 1 bis 3, **dadurch gekennzeichnet,** das die Druckfläche (1.1) aus einem Werkstoff besteht, der eine Rockwell-Härte mit einem Härtewert ≥ 50 HRC aufweist.

5. Verfahren nach einem der Ansprüche 1 bis 4, **dadurch gekennzeichnet, dass** der Gleitreibungskoeffizient (µ_{GR}) zwischen dem Material der Druckfläche und dem Kunststoffmaterial des Kunststoffverschlusses (4) µ_{GR} ≤ 0,50, vorzugsweise µ_{GR} ≤ 0,35 ist.

6. Verfahren nach einem der Ansprüche 1 bis 5, **dadurch gekennzeichnet, dass** die Oberkante (4.1) des Garantiebandes (4.2) jedes Kunststoffverschlusses (4) zeitweilig ringförmig an der Druckfläche (1.1) anliegt.

7. Faltvorrichtung zum kontinuierlichen Falten von an einer Oberkante (4.1) eines Garantiebandes (4.2) angebundenen Sperrelementen (4.4) übereinstimmender Kunststoffverschlüsse (4), wobei das Garantieband (4.2) an einer zylindrischen Verschlusskappe (4.5) jedes Kunststoffverschlusses (4) angeordnet ist, **gekennzeichnet durch**
- ein Taschenrad (5),
- eine an einer Unterseite des Taschenrades (5) angeordnete Führungsplatte (9), die eine in der Plattenebene liegende ringförmige Führungsfläche (9.1) aufweist,
- eine an einer Oberseite des Taschenrades (5) angeordnete Druckplatte (1), die eine gegenüber der Plattenebene (1.3) abgeschrägte, ringförmige Druckfläche (1.1) aufweist,
- einen Antrieb (6) mit einer um eine Drehachse (11) drehbaren Antriebswelle (6.1), eingerichtet um das Taschenrad (5), die Führungsplatte (9) und die Druckplatte (1) gleichsinnig mit übereinstimmender Winkelgeschwindigkeit zu drehen, wobei das Taschenrad (5) und die Führungsplatte (9) um die Drehachse (11) der Antriebswelle drehen,
- eine Ausgleichskupplung (7) zwischen der Antriebswelle (6.1) und der Druckplatte (1), die einen angularen Versatz (α) zwischen der Drehachse (11) der Antriebswelle (6.1) und der Drehachse (12) der Druckplatte (1) ausgleicht,
- Führungsmittel, eingerichtet um eine Drehung der Druckplatte (1) um deren Drehachse (12) mit angularem Versatz (α) zu der Drehachse (11) der Antriebswelle (6.1) zu bewirken,
- einen Einlaufbereich (3) für die ungefalteten Kunststoffverschlüsse (4.6) in das Taschenrad (5), wobei in dem Einlaufbereich (3) der Abstand zwischen der ringförmigen Druckfläche (1.1) und der ringförmigen Führungsfläche (9.1) größer als die Höhe des ungefalteten Kunststoffverschlusses (4.6) ist,
- einen in Drehrichtung des Taschenrades (5) hinter dem Einlaufbereich (3) angeordneten Faltbereich (10), wobei sich die ringförmige Druckfläche (1.1) und die ringförmige Führungsfläche (9.1) in dem Faltbereich (10) derart gegenüberliegen, dass die Oberkante (4.1) des Garantiebandes (4.2) jedes Kunststoffverschlusses (4) nach Beendigung des Faltvorgangs zeitweilig zumindest teilweise an der Druckfläche (1.1) anliegt.

8. Faltvorrichtung nach Anspruch 7, **dadurch gekennzeichnet, dass** der Abstand (H) zwischen der ringförmigen Druckfläche (1.1) und der ringförmigen Führungsfläche (9.1) in dem Faltbereich (10) gleich der oder geringfügig kleiner als die Höhe (h) der Verschlusskappe (4.5) und des Garantiebandes (4.2) des Kunststoffverschlusses (4) ist.

9. Faltvorrichtung nach Anspruch 7 oder 8, **dadurch gekennzeichnet, dass** der angulare Versatz (α) zwischen der Drehachse (11) der Antriebswelle (6.1) und der Drehachse (12) der Druckplatte (1) dem Winkel (α) der abgeschrägten, ringförmigen Druckfläche (1.1) gegenüber der Plattenebene (1.3) entspricht.

10. Faltvorrichtung nach einem der Ansprüche 7 bis 9, **dadurch gekennzeichnet, dass** die Führungsplatte und die Druckplatte kreisförmig sind.

11. Faltvorrichtung nach einem der Ansprüche 7 bis 10, **dadurch gekennzeichnet, dass** die Führungsmittel mindestens drei auf der Oberseite der Druckplatte (1) aufliegende Führungsrollen (8) aufweisen.

## Claims

1. Method for continuously folding locking elements (4.4) of matching plastic closures (4) connected to an upper edge (4.1) of a tamper-evident band (4.2), wherein the tamper-evident band (4.2) is arranged on a cylindrical closure cap (4.5) of each plastic closure (4), wherein
- each plastic closure (4) is continuously brought between a pressure surface (1.1) interacting with an upper edge (4.3) of the tamper-evident elements (4.4) and a guide surface (9.1) in a folding area (10) along a conveying path, wherein
- the plastic closures (4) run through the folding area (10),
- the pressure surface (1.1) and the guide surface (9.1) are arranged in the folding area (10) in such a manner with respect to one another that the upper edge (4.1) of the tamper-evident band (4.2) of each plastic closure (4) temporarily rests at least partially against the pressure surface (1.1) after completion of the folding process,
- the distance (H), i.e. the shortest distance between the pressure surface (1.1) and the guide surface (9.1) in the folding area (10) is equal to or slightly less than the height (h) of the closure cap (4.5) of the plastic closure (4) and the tamper-evident band (4.2) and
- the pressure surface (1.1) is rigid

2. Method according to Claim 1, **characterized in that** each plastic closure (4) is continuously brought into the folding area (10) by means of a continuous conveyor which is arranged along the conveying path of the continuous conveyor.

3. Method according to Claim 1 or 2, **characterized in that** the pressure surface (1.1) consists of a metallic material.

4. Method according to one of Claims 1 to 3, **characterized in that** the pressure surface (1.1) consists of a material having a Rockwell hardness with a hardness value ≥ 50 HRC.

5. Method according to one of Claims 1 to 4, **characterized in that** the coefficient of sliding friction (µ_{GR}) between the material of the pressure surface and the plastic material of the plastic closure (4) is µ_{GR} ≤ 0.50, preferably µ_{GR} ≤ 0.35.

6. Method according to one of Claims 1 to 5, **characterized in that** the upper edge (4.1) of the tamper-evident band (4.2) of each plastic closure (4) temporarily rests in an annular manner against the pressure surface (1.1).

7. Folding device for continuously folding locking elements (4.4) of matching plastic closures (4) attached to an upper edge (4.1) of a tamper-evident band (4.2), wherein the tamper-evident band (4.2) is arranged on a cylindrical closure cap (4.5) of each plastic closure (4), **characterized by**
- a pocket wheel (5),
- a guide plate (9) arranged on a bottom side of the pocket wheel (5) having an annular guide surface (9.1) lying in the plane of the plate,
- a pressure plate (1) arranged on a top side of the pocket wheel (5) having an annular pressure surface (1.1) chamfered with respect to the plane of the plate (1.3),
- a drive (6) with a drive shaft (6.1) rotatable about a pivot axis (11), adapted to rotate the pocket wheel (5), the guide plate (9) and the pressure plate (1) in the same direction and at the same angular velocity, wherein the pocket wheel (5) and the guide plate (9) rotate about the axis of rotation (11) of the drive shaft,
- a compensating coupling (7) between the drive shaft (6.1) and the pressure plate (1) which compensates for an angular offset (α) between the axis of rotation (11) of the drive shaft (6.1) and the axis of rotation (12) of the pressure plate (1),
- guide means, adapted to bring about a rotation of the pressure plate (1) about its axis of rotation (12) with an angular offset (α) with respect to the axis of rotation (11) of the drive shaft (6.1),
- an inlet area (3) for the unfolded plastic closures (4.6) into the pocket wheel (5), wherein in the inlet area (3) the distance between the annular pressure surface (1.1) and the annular guide surface (9.1) is greater than the height of the unfolded plastic closure (4.6),
- a folding area (10) arranged downstream of the entry area (3) in the direction of rotation of the pocket wheel (5), wherein the annular pressure surface (1.1) and the annular guide surface (9.1) lie opposite each other in the folding area (10) such that the upper edge (4.1) of the tamper-evident band (4.2) of each plastic closure (4) temporarily rests at least partially against the pressure surface (1.1) after completion of the folding process.

8. Folding device according to Claim 7, **characterized in that** the distance (H) between the annular pressure surface (1.1) and the annular guide surface (9.1) in the folding area (10) is equal to or slightly less than the height (h) of the closure cap (4.5) and the tamper-evident band (4.2) of the plastic closure (4).

9. Folding device according to Claim 7 or 8, **characterized in that** the angular offset (α) between the axis of rotation (11) of the drive shaft (6.1) and the axis of rotation (12) of the pressure plate (1) corresponds to the angle (α) of the bevelled, annular pressure surface (1.1) with respect to the plate plane (1.3).

10. Folding device according to one of Claims 7 to 9, **characterized in that** the guide plate and the pressure plate are circular.

11. Folding device according to one of Claims 7 to 10, **characterized in that** the guide means comprise at least three guide rollers (8) resting on the top side of the pressure plate (1).

## Revendications

1. Procédé, destiné au pliage en continu d'éléments de blocage (4.4) attachés sur une arête supérieure (4.1) d'une bande de garantie (4.2) de fermetures en matière plastique (4) concordantes, la bande de garantie (4.2) étant placée sur un capuchon de fermeture (4.5) cylindrique de chaque fermeture en matière plastique (4),
- chaque fermeture en matière plastique (4) étant amenée en continu entre une surface de pression (1.1) interagissant avec un bord (4.3) supérieur des éléments de blocage (4.4) et une surface de guidage (9.1) dans une zone de pliage (10) le long d'un trajet de convoyage,
- les fermetures en matière plastique (4) passant à travers la zone de pliage (10),
- dans la zone de pliage (10), la surface de pression (1.1) et la surface de guidage (9.1) étant placées l'une par rapport à l'autre de telle sorte qu'après l'achèvement du processus de pliage, l'arête supérieure (4.1) de la bande de garantie (4.2) de chaque fermeture en matière plastique (4) soit temporairement adjacente au moins partiellement à la surface de pression (1.1),
- l'écart (H), c'est-à-dire la plus faible distance entre la surface de pression (1.1) et la surface de guidage (9.1) dans la zone de pliage (10) étant égal ou légèrement inférieur à la hauteur (h) du capuchon de fermeture (4.5) de la fermeture en matière plastique (4) et de la bande de garantie (4.2) et
- la surface de pression (1.1) étant rigide.

2. Procédé selon la revendication 1, **caractérisé en ce que** chaque fermeture en matière plastique (4) est amenée en continu au moyen d'un convoyeur en continu dans la zone de pliage (10) qui est placée le long du trajet de convoyage du convoyeur en continu.

3. Procédé selon la revendication 1 ou 2, **caractérisé en ce que** la surface de pression (1.1) est constituée d'une matière métallique.

4. Procédé selon l'une quelconque des revendications 1 à 3, **caractérisé en ce que** la surface de pression (1.1) est constituée d'une matière qui fait preuve d'une dureté Rockwell d'une valeur de dureté ≥ 50 HRC.

5. Procédé selon l'une quelconque des revendications 1 à 4, **caractérisé en ce que** le coefficient de frottement de glissement (µ_{GR}) entre la matière de la surface de pression et la matière plastique de la fermeture en matière plastique (4) est de µ_{GR} ≤ 0,50, de préférence de µ_{GR} ≤ 0,35.

6. Procédé selon l'une quelconque des revendications 1 à 5, **caractérisé en ce que** l'arête supérieure (4.1) de la bande de garantie (4.2) de chaque fermeture en matière plastique (4) est temporairement adjacente sous forme annulaire à la surface de pression (1.1).

7. Dispositif de pliage, destiné au pliage en continu d'éléments de blocage (4.4) attachés sur une arête supérieure (4.1) d'une bande de garantie (4.2) de fermetures en matière plastique (4) concordantes, la bande de garantie (4.2) étant placée sur un capuchon de fermeture (4.5) cylindrique de chaque fermeture en matière plastique (4),
**caractérisé par**
- une roue à poches (5),
- une plaque de guidage (9), placée sur une face inférieure de la roue à poches (5), qui comporte une surface de guidage (9.1) de forme annulaire, située dans le plan de la plaque,
- une plaque de pression (1), placée sur une face supérieure de la roue à poches (5), qui comporte une surface de pression (1.1) de forme annulaire, chanfreinée par rapport au plan de la plaque (1.3),
- un entraînement (6) pourvu d'un arbre d'entraînement (6.1) rotatif autour d'un axe de rotation (11), configuré pour faire tourner la roue à poches (5), la plaque de guidage (9) et la plaque de pression (1) dans le même sens, avec une vitesse angulaire concordante, la roue à poches (5) et la plaque de guidage (9) tournant autour de l'axe de rotation (11) de l'arbre d'entraînement,
- un accouplement compensateur (7) entre l'arbre d'entraînement (6.1) et la plaque de pression (1), qui compense un décalage (α) angulaire entre l'axe de rotation (11) de l'arbre d'entraînement (6.1) et l'axe de rotation (12) de la plaque de pression (1),
- des moyens de guidage, configurés pour provoquer une rotation de la plaque de pression (1) autour de son axe de rotation (12), avec un décalage (α) angulaire par rapport à l'axe de rotation (11) de l'arbre d'entraînement (6.1),
- une zone d'entrée (3) pour les fermetures en matière plastique (4.6) non pliées dans la roue à poches (5), dans la zone d'entrée (3) l'écart entre la surface de pression (1.1) de forme annulaire et la surface de guidage (9.1) de forme annulaire étant supérieur à la hauteur de la fermeture en matière plastique (4.6) non pliée,
- une zone de pliage (10) placée derrière la zone d'entrée (3) dans la direction de rotation de la roue à poches (5), la surface de pression (1.1) de forme annulaire et la surface de guidage (9.1) de forme annulaire étant placées en vis-à-vis l'une de l'autre dans la zone de pliage (10), de telle sorte qu'après l'achèvement du processus de pliage, l'arête supérieure (4.1) de la bande de garantie (4.2) de chaque fermeture en matière plastique (4) soit temporairement adjacente au moins partiellement à la surface de pression (1.1).

8. Dispositif de pliage selon la revendication 7, **caractérisé en ce que** l'écart (H) entre la surface de pression (1.1) de forme annulaire et la surface de guidage (9.1) de forme annulaire dans la zone de pliage (10) est égal ou légèrement inférieur à la hauteur (h) du capuchon de fermeture (4.5) et de la bande de garantie (4.2) de la fermeture en matière plastique (4).

9. Dispositif de pliage selon la revendication 7 ou 8, **caractérisé en ce que** le décalage (α) angulaire entre l'axe de rotation (11) de l'arbre d'entraînement (6.1) et l'axe de rotation (12) de la plaque de pression (1) correspond à l'angle (α) de la surface de pression (1.1) de forme annulaire chanfreinée par rapport au plan de la plaque (1.3).

10. Dispositif de pliage selon l'une quelconque des revendications 7 à 9, **caractérisé en ce que** la plaque de guidage et la plaque de pression sont de forme circulaire.

11. Dispositif de pliage selon l'une quelconque des revendications 7 à 10, **caractérisé en ce que** les moyens de guidage comportent au moins trois galets de guidage (8) s'appuyant sur la face supérieure de la plaque de pression (1).
